Europäisches Patentamt

European Patent Office

Office européen des brevets

(11) Publication number: **0 268 406**
**A2**

## (12) EUROPEAN PATENT APPLICATION

(21) Application number: **87309798.4**

(22) Date of filing: **05.11.87**

(51) Int. Cl.⁴: **C12Q 1/68**

(30) Priority: **06.11.86 GB 8626575**

(43) Date of publication of application:
**25.05.88 Bulletin 88/21**

(84) Designated Contracting States:
**AT BE CH DE ES FR GB IT LI LU NL SE**

(71) Applicant: **AMERSHAM INTERNATIONAL plc**
**Amersham Place**
**Little Chalfont Buckinghamshire HP7**
**9NA(GB)**

(72) Inventor: **Finlan, Martin Francis**
**7 Ballard Close**
**Aylesbury Bucks(GB)**
Inventor: **Brady, Michael Anthony Warburton**
**Amersham Place**
**Little Chalfont Buckinghamshire HP7**
**9NA(GB)**

(74) Representative: **Boydell, John Christopher et al**
**Stevens, Hewlett & Perkins 5 Quality Court**
**Chancery Lane**
**London, WC2A 1HZ(GB)**

(54) **Apparatus for biochemical sequencing.**

(57) Apparatus for biochemical sequencing including gel electrophoresis apparatus in which the movement of the equal-length nucleotide bands within the gel (16) during the electrophoresis test is monitored by placing a large area semiconductor detector (25) adjacent to and parallel to the gel surface. The detector has strip electrodes (not shown) which extend orthogonally to the direction of movement of the bands and are spaced in the direction of the tracks formed by movement of the bands whereby the movement of the bands may be monitored.

FIG.6

## "APPARATUS FOR BIOCHEMICAL SEQUENCING"

This invention relates to apparatus for sequencing and, in particular, biochemical sequencing.

Sequencing of macromolecules, for example nucleic acids such as DNA, is usually carried out by biochemical fragmentation, followed by gel electrophoresis. The sequence is detected by exposure of the gel to autoradiographic film to give a two dimensional picture from which the sequence of individual nucleotide bases can be read. There are currently two main techniques used for fragmentation, the Maxam-Gilbert method involving the cleavage of the DNA molecule by a two-stage addition of chemicals, and the Sanger method involving the preparation of separate samples of dideoxynucleotide of each of the four bases C, G, A and T and then the growth of a complementary DNA strand to that of the DNA under test using an enzyme. Both techniques end up with four different samples, enabling identification of the four bases, each containing fragments of different lengths. A radioactive or fluorescent label is attached to each fragment to enable detection of the sequence using autoradiography. In electrophoresis, the four different sets of labelled fragments are each placed in a separate well and thus generate a separate and distinct track across the gel as the electrophoresis proceeds. After the electrophoresis has finished, the gel is separated and dried and is then exposed to autoradiographic film to obtain an image of the pattern of labelled fragments of different length and belonging to different nucleotide groups.

Autoradiography, whilst it can offer good sensitivity and resolution is an inconvenient technique, taking considerable skill to achieve good results, and is a fairly lengthy technique, requiring many hours or even several weeks of exposure. Furthermore, separa tion of the gel after electrophoresis can lead to damage unless great care is taken, and the very necessary drying of the gel prior to exposure is also tricky since shrinking of the gel must be avoided if meaningful results are to be obtained.

In the present invention, the requirement for autoradiography is eliminated by direct detection of events occurring within the electrophoresis gel. This can either be done as electrophoresis proceeds by means of a stationary large are a solid state detector or a completed electrophoresis gel can be scanned by such a detector. The detector comprises a plate of pure semiconductor material such as silicon, gallium arsenide, mercuric iodine or mercuric telluride, which has been cut from a single crystal. Mounted on both sides of the plate are electrodes which are arranged in different patterns according to the type of detector -examples will be described in more detail hereinafter.

A well researched example of such a detector is the silicon detector which is fabricated from a plate of high resistivity silicon having a resistivity greater that 3000 Ω cm and preferably 5000 Ω cm. A plurality of parallel spaced strip electrodes are attached to at least one face of the plate. These strips are connected to detection electronics operable to provide a readout of the detector output. The other face of the plate may be provided with a solid metallic substrate or a further plurality of parallel strip electrodes which are parallel to the electrodes on the first-mentioned face. A potential gradient is applied across the plate - as will be explained in more detail hereinafter - in order to deplete the plate material of minority carriers in order to eliminate non-linear effects in the readout.

A charged particle or photon traversing the plate produces within the semiconductor material electron-hole pairs which traverse towards the electrodes on one face or the other depending upon the direction of the electric field set up by the aforsaid potential gradient. This causes a pulse of current to flow in the electrode(s) concerned and may thus be picked up and analysed by the associated electronics. The more energetic the particle, the greater the number of hole-electron pairs that are released, and the greater the amplitude of the current pulse which results. The pitch of the strip electrodes is typically 20 μm which can achieve a readout resolution in the region of 3 μm.

In the apparatus of the invention, the detector is placed parallel to and a short distance from the surface of the electrophoresis gel. During electrophoresis, bands of radioactivity, each representing a group of fragments of particular length, will emerge from the wells and traverse the gel, passing the detector. For a single sample, four parallel tracks, each representing a nucleotide group, will enable complete characterisation of the DNA molecule, and the detector is arranged in such a way that the strip electrodes are at right angles to the direction of the tracks so that the bands of radioactivity, as they proceed along the tracks, will cross the strip electrodes of a stationary detector and will thus generate output signals in the electrodes representive of the sequencing pattern.

Since four separate tracks are to be detected, four separate detectors can be used, one for each track. Alternatively one sheet of semiconductor material can be formed with separate sets of electrodes in such a way as to make four distinct detectors. This latter can be achieved either by forming an entirely separate set of strip electrodes for each track or, in the case of silicon drift detectors (see below), by means of strip electrodes covering all four tracks with a separate anode for each track.

In practice electrophoresis is frequently carried out on a number of samples simultaneously and there may therefore be a requirement for a detector able to cover more than four tracks. Currently, it is believed that silicon billets of up to 15 cm width are available which should enable 4 samples (i.e. 16 tracks) to be monitored simultaneously.

In order that the invention may be better understood an embodiment thereof will now be described by way of example only and with reference to the accompanying drawings in which:-

Figures 1 and 2 are diagrammatic side and plan views of a silicon strip detector suitable for use in the apparatus of the present invention;

Figure 3 is a block diagram showing typical readout circuitry for the detector of Figures 1 and 2;

Figure 4 is a diagrammatic side view of a silicon drift detector suitable for use in the apparatus of the present invention;

Figure 5 is a diagrammatic plan view of a multi-anode drift detector;

Figure 6 is a diagrammatic sectional view of an electrophoresis apparatus incorporating a large area semiconductor detector; and

Figure 7 is an enlarged view of part of the apparatus shown in Figure 6.

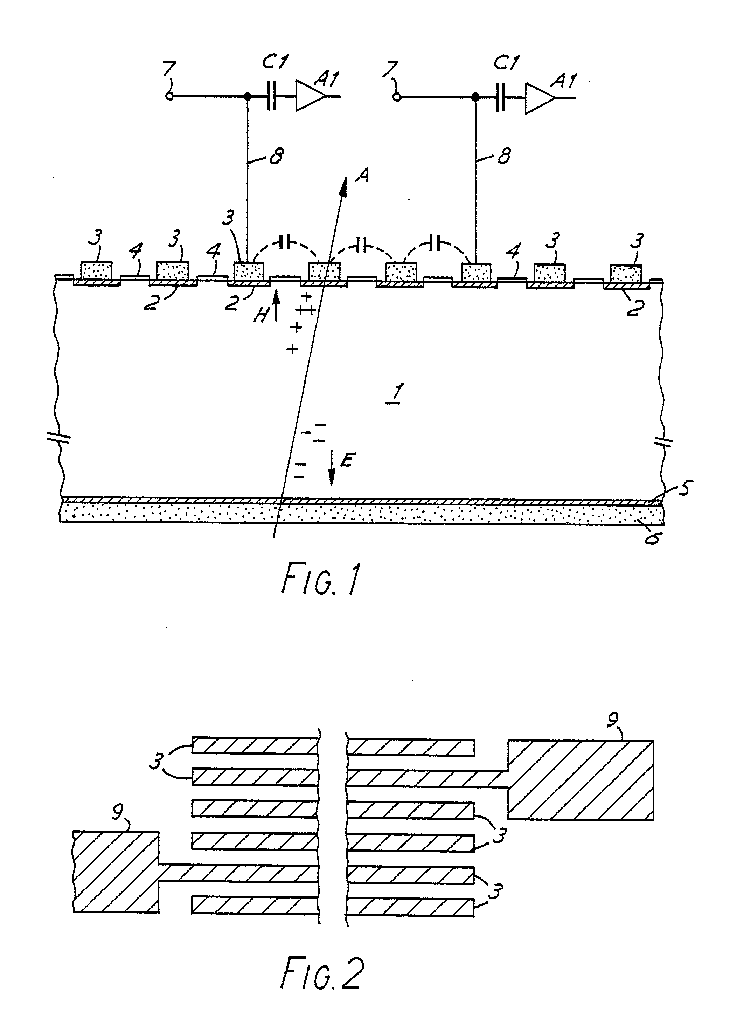

Referring firstly to Figures 1 and 2, the principles of the silicon detector will be explained. The detector comprises a plate 1 of high purity n-type silicon cut from a single crystal and typically of 280 $\mu$ m thickness. Mounted onto the upper face of the crystal by way of rectifying junctions of p$^+$ material 2 such as boron are strip electrodes 3 with a pitch of typically 20 $\mu$ m. An insulating layer 4 of silicon dioxide is applied to the exposed area of the crystal. Mounted onto the lower face of the crystal by way of a rectifying junction of n$^+$ material 5 such as arsenic is a continuous backplane 6 of aluminium, typically I $\mu$m thick. The backplane 6 can also take the form of a plurality of strip electrodes orientated orthogonally to electrodes 3, as will be explained later. The connection from each strip electrode 3 through the silicon to the backplane is electrically equivalent to two series-connected diodes. A potential difference, typically one hundred volts, is applied between the backplane and the terminals 7 in a direction such as to reverse bias these diodes. This potential clears out any minority carriers from the silicon and also sets up an electric field within the silicon to control the movement of electrons and holes - see below.

Each terminal 7 is connected to an associated strip electrode 3 by means of a lead 8. Also connected to the lead 8 is the input of readout electronics for each strip, to be described in more detail later. In Figure 1, the readout electronics is represented by an isolating capacitor C1 and an amplifier A1.

Each lead 8 is connected to its associated strip electrode 3 by means of a connection pad 9 (see Figure 2). It will be noted that not every strip electrode 3 has a connection pad, this being in order to reduce the complexity of the readout electronics. It has been found that it is not essential to connect a lead 8 to all strip electrodes 3, the only penalty being a small reduction in spatial resolution. For example, for a strip electrode pitch of 20 $\mu$m, the spatial resolution can be 3 $\mu$m if all electrodes are connected; for a connection pitch of 60 $\mu$m - i.e. every third electrode connected - the spatial resolution falls to 4.5 $\mu$m. Where not all electrodes are connected, the unconnected electrodes utilise the principle of capacitive charge division to transfer the signal to the nearest connected readouts. A resistive connection is also made between all of the electrodes to ensure that they are all at substantially the same potential with respect to the backplane 6 in order to achieve a uniform electric field distribution within the silicon plate 1.

However the strip electrodes are connected, the principle of operation is essentially the same. Passage of a particle such as a $\beta$ particle from a nearby radioactive event, or passage of a photon through the detector in the manner represented by the arrow A causes the release, within a narrow tube about the arrow A in the silicon, of electron-hole pairs which move upwards or downwards according to the direction of the electric field within the silicon. This movement is represented by arrows E (for electrons) and H (for holes). The movement of charge manifests itself in the readout electronics as a pulse of current in that strip electrode or electrodes nearest to the passage of the particle or photon. The detector is thus able to detect the passage of radioactive particles or photons with high resolution.

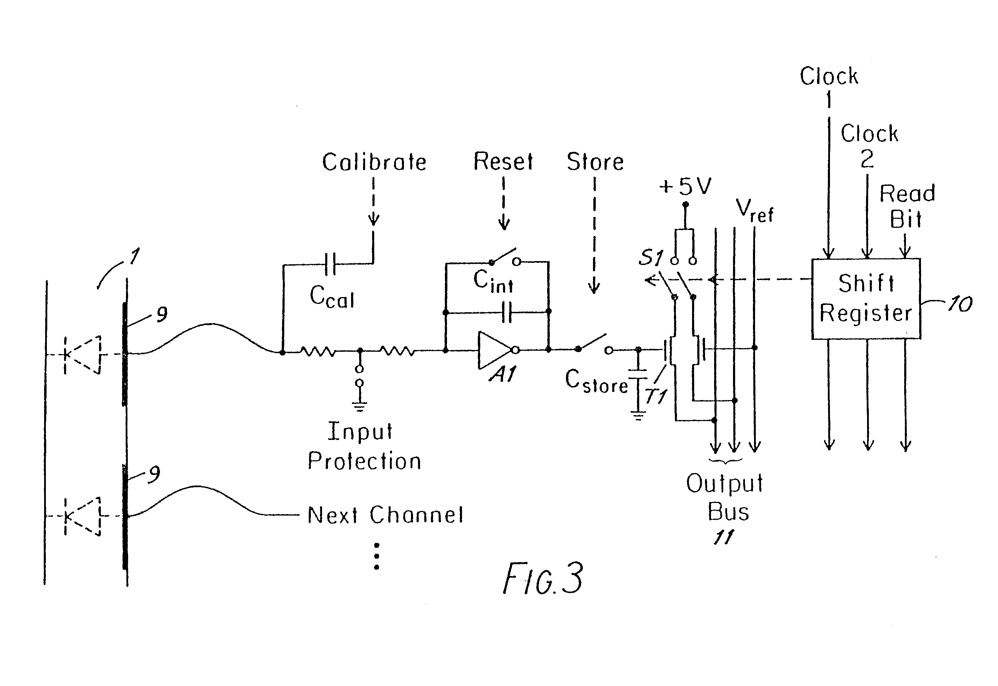

Typical readout electronics is illustrated diagrammatically in Figure 3. The output from each connection pad 9 is amplified in amplifier A1 and stored temporarily in capacitor C$_{store}$. A shift register 10 cycles round the various channels closing, as it does so, a switch S1 for each channel and applying, if there is a signal present on capacitor C$_{store}$, a +5V level to an output bus 11. Thus there is built up on the output bus 11 a serial signal representative of a continuous sequential scanning of the strip electrodes 3.

The simple circuit illustrated in Figure 3 will enable detection of the passage of a particle or photon through the detector, but little else. It will be clear however that it is readily possible to apply to the serial bus a signal representative of the amplitude of the current generated by passage of a particle or photon. In this way an indication of the energy of radioactive particles can be measured and this in turn leads to the possibility of a single-track electrophoresis apparatus in which the fragments separated out in the fragmentation process are distinguished according to their base by virtue of their having attached thereto a radioactive label having a different energy to that of the other bases or base combinations. Thus, by incorporating into the electronics some means for discriminating between the separate amplitude levels which would result from two or more different-energy particles, the requirement for the original sample to be split into four for electrophoresis would be eliminated. This would enable two or more times as many samples to be tested simultaneously on a given size of electrophoresis apparatus.

Providing energy discrimination in this way also enables extraneous events occurring spontaneously within the silicon, and representative of noise, to be excluded from the readout.

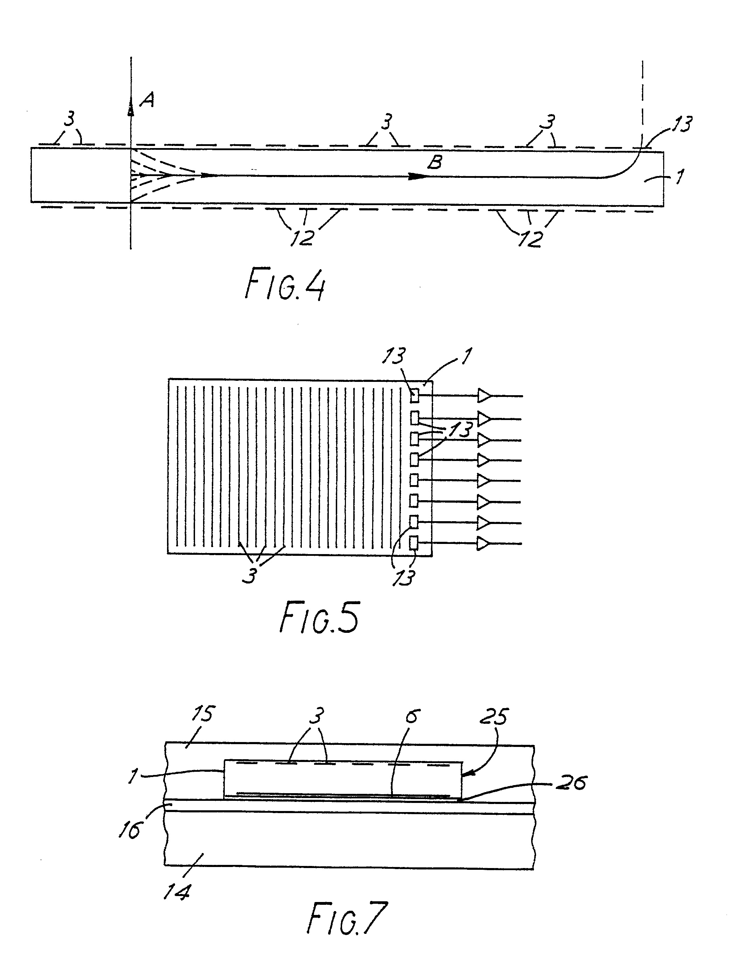

An alternative type of detector, known as the silicon drift detector, is shown in Figure 4. The construction is very similar to that described above with reference to Figures 1 and 2, with the exception that the continuous backplane 6 is replaced by a further plurality of strip electrodes 12 similar to electrodes 3, and with each electrode 12 placed opposite to a corresponding electrode 3. Also, the rightmost upper strip electrode is connected as an anode 13. The operation of the drift detector relies on achieving an electric field distribution within the silicon plate 1 which causes the electrons, once liberated by passage of a particle or photon (see arrow A), to move or "drift" in a rightwards direction along the path indicated by arrow B, eventually to be collected by the anode 13. The holes meanwhile flow to the nearest strip electrode 3 and/or 12. Thus, in response to the passage of a particle or photon a current is set up between the anode 13 and one or more strip electrodes 3 or 12.

The desired electron drift is achieved by correct choice of the potentials on the strip electrodes 3 and 12. It will be noted that the electrodes on the top and bottom are in oppositely-disposed pairs; the potentials are arranged such that the electrodes 3 and 12 of each such pair have the same potential so that there is no component of electric field directly across the silicon plate 1. Each set of plates is, however, at a different potential to the next, providing a continuous rising or falling potential gradient as one moves along the plate 1. The anode 13, for example, might be at ground potential, with the next adjacent strip electrode 3 and its corresponding opposite electrode 12 at a negative potential of 100 volts. The next pair 3, 12 of strip electrodes will have a higher negative potential, say 110 volts, and so on to the left-hand end of the detector. The electric field distribution which results acts effectively as a sloping "gutter", positioned along the centre of the silicon plate, along which liberated electrons flow from left to right in Figure 4. At the right-hand end, the field distribution is distorted in such a way as to cause the electrons to flow into the anode, as mentioned above.

One of the advantages of the drift detector is that it can be configured as a multi-anode detector, enabling detection of events in two dimensions. Such a detector is illustrated diagrammatically in Figure 5 which is a view of the top surface showing only the strip electrodes 3 (the electrodes 12 being hidden), together with a plurality of anodes 13. Both the anodes 13 and the strip electrodes 3 and 12 are connected to suitable readout electronics (not shown).

In such a detector, passage of a particle or photon will liberate holes, which will go to the adjacent strip electrode 3 and/or 12, as before, and electrons which will drift in a rightwards direction along a path at right angles to the strip electrodes and will eventually enter one of the anodes 13, thus causing a pulse of current which can be amplified and processed by readout electronics. Thus the X-Y coordinate position of the passage of the particle or photon can be assessed by knowledge of the particular strip electrode and anode concerned. In practice the strip electrodes and anodes can be continuously two-dimensionally scanned to obtain a picture of events occurring within the silicon plate 1.

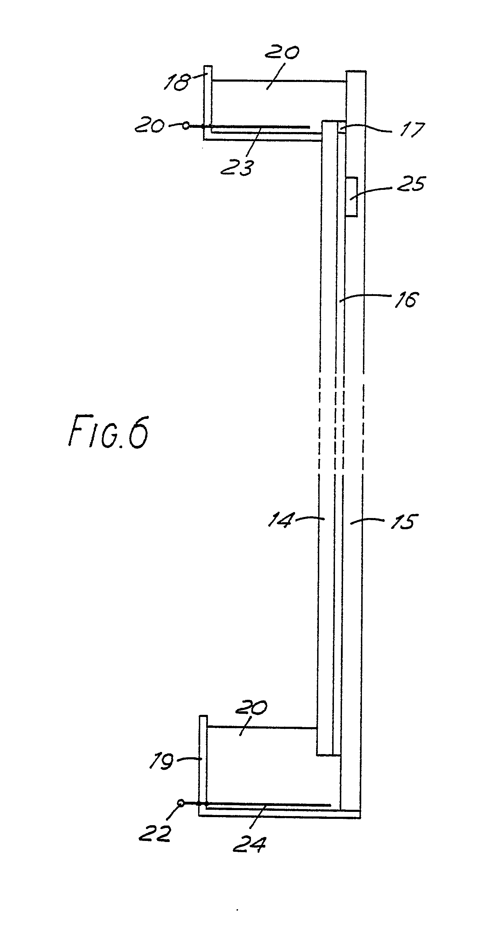

Figures 6 and 7 show the use of silicon detectors of the type described above in an electrophoresis apparatus. The basic form of the electrophoresis apparatus is standard and will not be described in detail. The apparatus comprises a pair of glass plates 14,15 between which is sandwiched a layer 16 of polyacrylamide gel, typically 0.4 mm thick. Formed in the top surface of the gel are four separate wells 17 which each carry a sample to be analysed. The right-hand glass plate 15 extends beyond the left hand plate 14 at top and bottom in order to define one wall of a respective reservoir 18,19 containing a salt solution 20 which allows conduction of current between electrodes 23 and 24 upon application of a suitable voltage across terminals 21, 22. The current flow is by way of the layer 16 of gel which is in contact with the salt solution at top and bottom. A sample to be analysed is fragmented in the manner described above to give the four different sub-samples required to enable identification of the four bases. One sub-sample is placed in each well 17 and a potential applied across the terminals 21,22. During electrophoresis, the gel acts as a skeletal foam in which are formed pores through which the material of the samples can pass under the influence of the electric current. The action of the current causes the fragments to migrate through the gel, forming a distinct track emanating from each well, and travelling downwards towards the bottom of the gel. In travelling through the gel, the fragments formed by the fragmentation process tend to travel through in groups of identical length, those groups containing the shorter length fragments tending to travel faster through the gel than those containing the longer length fragments. As a result, the different groups tend to be bunched up near the top of the gel - i.e. nearest the well - but as they travel down the gel they become spread out because they are travelling at different speeds. The progress of the fragments through the gel is, of course, invisible to the naked eye but dyes can be used to enable visual monitoring of progress.

Set into one of the plates of glass - in this case plate 15 - is a large-area silicon detector 25 such as one of the types described above. A thin layer 26, for example of polyimide, lies between the gel surface and the detector itself, but the detector is otherwise as close as possible to the gel surface. The detector 25 is orientated in such a way that the strip electrodes 3 lie orthogonally to the tracks formed during electrophoresis. Thus, as electrophoresis proceeds, the bands formed by the groups of identically dimensioned fragments move across the strips.

Care must be taken with the positioning of the detector along the tracks; if the detector is positioned near the source of the tracks - i.e. the wells 17 - the selectivity of the detector may be impaired due to the aforementioned bunching in this area; on the other hand, if the detector is placed too far away from the wells then some of the groups of longer fragments may be missed altogether.

Either of the above-described detectors can be used. In the case of the Figure 4 detector, the spacing of the anodes 13 will be such that they each overlie a single track - thus, for a four track electrophoresis apparatus, a four-anode detector will be needed. The detector of Figure 1 is somewhat more of a problem since, as shown, it is clearly unsuitable for monitoring more than a single track. One solution is to provide an individual detector, let into glass plate 15, for each track. The detectors can be completely separate entities or can be formed as separate sets of electrodes on a common silicon plate 1. A further alternative is to divide up the aluminium backplane 6 into mutually insulated strips extending orthogonally to the strip electrodes 3. Each such backplane strip is positioned to overly a respective track but, in doing this, care must be taken not to too greatly distort the electric field pattern within the silicon, or resolution becomes impaired. To this end, the distance between these backplane strips is kept to a minimum - for example 6 to 10 $\mu$m.

The operation of the apparatus will now be described. It has already been mentioned that a radioactive or fluorescent label is associated with each of the sub-samples to be analysed. As the various equal-length groups of fragments move along their respective tracks through the gel they pass across and close to the detector. Thus any radioactive events which occur or photons which are emitted during the time that each group passes the detector have a good chance of sending photons or radioactive particles such as $\beta$-particles through the silicon in the manner represented by the arrows A in Figure 1 and 4. Clearly, with emission of particles or photons from a particular area within the gel, a particular electrode 3 will receive most of the current carriers and therefore the progress of a particular group can be monitored as it progresses along the track past successive electrodes 3/12. Using suitable electronics a picture can thus be built up of the sequence of nucleotide groups within the sample. This will involve clocking the groups of equal-length fragments as they proceed past the electrodes to provide information as to their speed of travel; this information can then be computed to indicate the position of the particular group at the end of the test even though the group will, by this time, probably have long past the detector.

The multi-anode drift detector described in relation to Figures 4 and 5 and the split groundplane version of the strip detector of Figure 1 are both able, in addition to giving information as to the occurrence of events in the direction of the tracks, to give information as to the occurrence of events at right angles to the tracks - in other words, where the detector covers a plurality of tracks, is able to give information as to which track the event or events occur in.

Suitable electronics can be used to analyse the results to give information as to the sequence of nucleotides in the original sample without the need for autoradiography followed by visual interpretation by a skilled operator. The system is thus more reliable, quicker and therefore, in the long run, cheaper than the existing techniques.

It will be noted that Figure 7 shows the Figure 1 detector with the groundplane 6 adjacent the gel. For radioactive particles, it does not matter whether the surface containing groundplane 6 or that containing the electrodes 3 is closest to the gel since the particles will pass through anyway. Where fluorescent labels are used, the groundplane surface should be remote from the gel. Obviously the same problem does not arise for the detector of Figures 4 and 5 and indeed the anodes may be on the surface nearest the gel or otherwise from the point of view of detector operation. Also the anodes may lead or trail the electrodes 3 in the direction of movement of the electrophoresis tracks.

There has been described an electrophoresis apparatus in which the progress of the test can be monitored across a plurality of tracks simultaneously and as it happens. In a typical apparatus, several samples may be tested simultaneously; for simultaneous testing of four samples, for example, the detector will have to be wide enough to cover sixteen tracks (assuming four tracks for each sample) which, at a typical track pitch of approaching 1 cm requires in a single detector, a billet of silicon 15 cm wide. It is believed that these are shortly to become available.

Although in theory a simple detector with just a single strip electrode 3 would operate, a plurality of electrodes, for example 50, will give more informative results; in particular the velocity of travel of the groups of equal length. fragments can be calculated, as mentioned above. It is even possible, with a multi electrode detector to incorporate a feedback loop to alter the electrophoresis conditions in order to improve speed and resolution. For example, if groups are too close together to be readily distinguished, it would be possible to slow down the speed of movement by automatically lowering the electrophoresis potential, and thus increase the spacing for improved detection by later strip electrodes.

In a further modified form of the invention (not shown) a further detector is placed, similarly to the first, in the other plate 14 of glass - see Figure 6 - in a position directly opposite the first. By this means virtual 4 or coincidence counting can be achieved.

**Claims**

1. Apparatus for biochemical testing, said apparatus comprising a large area semiconductor detector consisting of a plate of semiconductor material having electrodes mounted on at least one surface thereof, means for mounting a laminar specimen with respect to said detector in such a way that charged particles or photons emitted by the specimen enter said plate of semiconductor material to thereby generate a signal in one or more of said electrodes, and means for analysing the signal outputs of said electrodes to ascertain the distribution of radioactive or fluorescent activity within the specimen.

2. Apparatus as claimed in claim 1 wherein said specimen takes the form of the electrophoresis gel forming part of an electrophoresis apparatus, and wherein the plate is placed parallel to the surface of the gel.

3. Apparatus as claimed in claim 2 wherein one surface of the plate is formed with a plurality of parallel strip electrodes, which strip electrodes are spaced apart in a direction approximately parallel with the direction of movement of the band or bands extending within the electrophoresis gel during electrophoresis and each of which bands is representative of a grouping of equal-length fragments within a sample being analysed.

4. Apparatus as claimed in claim 3 wherein that surface of the plate opposite to said one surface is formed with a single plate electrode.

5. Apparatus as claimed in claim 3 wherein that surface of the plate opposite to said one surface is formed with a further set of spaced strip electrodes, parallel to each other and to the electrodes of the first-mentioned set of electrodes.

6. Apparatus as claimed in either one of claims 4 or 5 wherein a d.c. potential is established between the electrodes on said one surface and the electrode or electrodes on said opposite surface so as to deplete the plate material of minority carriers.

7. Apparatus as claimed in claim 5 wherein the potentials on said electrodes are such as to define a gutter along which free charge carriers will move, and further comprising at least one still further electrode positioned and having a potential such that it is operable to collect said free charge carriers travelling along said gutter.

8. Apparatus as claimed in claim 7 including a plurality of said still further electrodes, said electrodes being spaced apart in a direction orthogonal to the spacing of the first and second sets of electrodes in such a way that each such electrode overlies a respective track within the electrophoresis gel formed by movement of said band or bands.

9. A method of analysing the results of an electrophoresis test in biochemical sequencing with the use of a large area silicon detector comprising a plate of semiconductor material positioned parallel to the electrophoresis gel in such a way that charged particles or photons emitted by said gel during electrophoresis will enter the plate, said plate being formed on at least one surface thereof with a plurality of electrodes spaced apart in the direction of movement of the bands generated in the gel during the course of the electrophoresis, said method comprising monitoring, during the course of the electrophoresis test, the electrodes for signals due to radioactive or fluorescent activity within the gel, and analysing said signals to monitor the progress of the electrophoresis test as the bands pass across the detector.

10. A method as claimed in claim 9 wherein the activity is observed by monitoring the pulse of current which occurs in that electrode or those electrodes nearest to the event, so that the position of the event within the gel can be ascertained by knowledge of the spatial position of that electrode or those electrodes in which the pulse occurred.

11. A method as claimed in either one of claims 9 or 10 further including measuring the energy of the particles or photons entering the plate of semiconductor material.

12. A method as claimed in any one of claims 9, 10 or 11 including timing the passage across the electrodes of groups of equal-length fragments travelling within the gel to provide information as to their speed of travel, thence using this information to compute the position of that particular group after a predetermined time representative of the termination of the test, and thus to build up a representation of the pattern of fragments within the gel.

FIG. 1

FIG. 2

Fig. 3

0 268 406

FIG.4

FIG.5

FIG.7

FIG.6